# EUROPEAN PATENT APPLICATION

(11) **EP 2 579 603 A1**
(43) Date of publication of application: **10.04.2013**
(21) Application number: 11786377.9
(22) Date of filing: 08.02.2011
(51) Int. Cl.: H04N 13/04, G02B 27/22, G02F 1/133, G09G 3/20, G09G 3/34, G09G 3/36, H04N 5/57, H04N 5/66

(54) **LIQUID CRYSTAL DISPLAY DEVICE**

(30) Priority: 28.05.2010 JP 2010123460
(71) Applicant: Sharp Kabushiki Kaisha, Osaka-shi, Osaka 545-8522 (JP)
(72) Inventor: INOUE, Akihiko, Osaka 545-8522 (JP); TERANUMA, Osamu, Osaka 545-8522 (JP); TAKAHASHI, Masayuki, Osaka 545-8522 (JP)
(74) Representative: Goddar, Heinz J.
(86) International application number: PCT/JP2011/052636
(87) International publication number: WO 2011/148677

(57) **Abstract**

A liquid crystal display device of the present invention includes: a liquid crystal panel (1) capable of switching between a 2D display and a 3D display; a digital γ correction section (21) for changing a gamma characteristic of a video signal supplied to the liquid crystal panel (1); a backlight (2) for backlighting the liquid crystal panel (1), which backlight includes an LED serving as a light source; and a backlight driving section (13) for controlling driving of the backlight (2). When the 3D display is carried out on the liquid crystal panel (1), the backlight drive control section (13) controls the driving of the backlight such that luminance of the LED is higher than that for the 2D display, and the digital γ correction section (21) changes a gamma characteristic of a video signal such that (i) luminance on a low gray level side is lower than that for the 2D display and (ii) luminance on a high gray level side is higher than that for the 2D display. This makes it possible to increase luminance perceived by a user without increasing the number of LEDs.

## Description

### Technical Field

The present invention relates to a liquid crystal display device capable of a 3D (three-dimensional) display.

### Background Art

In recent years, a liquid crystal display capable of a 3D (three-dimensional) display as well as a 2D (two-dimensional) display has been developed.

Note however that, when a liquid crystal display carries out a 3D display, luminance of the 3D display is usually lower than that of a 2D display. In particular, a 3D liquid crystal display which employs a time-division driving method (frame sequential method) using a pair of active shutter glasses causes a problem in which its luminance is significantly lower than that of a 2D liquid crystal display.

Specifically, a 3D liquid crystal display provides a stereoscopic view to a viewer by (i) alternately displaying a right-eye image and a left-eye image with a parallax on a liquid crystal panel for example every 1/120 second and (ii) in synchronization with this, alternately opening and closing shutters of the left and right lenses of a pair of liquid crystal active shutter glasses to thereby separate images to be captured by right and left eyes. However, luminance of images viewed through the pair of liquid crystal active shutter glasses decreases for example because (a) the shutters of the pair of liquid crystal active shutter glasses open and close only one at a time (shutter open time is equal to or less than 50% in time), (b) images are viewed through the pair of liquid crystal active shutter glasses (transmittance is usually approximately 80% to 90%), and (c) an ideal ON ratio (Duty ratio) of a backlight which carries out backlight scanning is not more than 50%.

Usually, in order to increase luminance of a liquid crystal display, for example luminance of a backlight is increased as disclosed in for example Patent Literature 1.

### Citation List

### Patent Literature

Patent Literature 1
   Japanese Patent Application Publication, Tokukai No. 2007-110220 A (Published on April 26, 2007)

### Summary of Invention

### Technical Problem

Meanwhile, in a case of a backlight using a cold cathode tube, luminance can be increased by for example increasing the number of cold cathode tubes. Note, however, that this causes a problem in which power consumption increases and also heat generation increase.

On the other hand, a backlight using an LED, which has been increasingly used in recent years, has the following advantage. Even in a case where the number of LEDs is increased for an increase in luminance, the power consumption less increases than the case of the backlight using the cold cathode tubes and also heat generation does not increase as compared to the case of the backlight using the cold cathode tubes.

However, an LED is expensive. Therefore, increasing the number of LEDs will result in cost increase. This is another problem.

Further, even when the number of LEDs is increased to some extent, a user does not perceive the increase in luminance of the backlight although the value of the luminance is increased. Even if an increase in the number of LEDs can give a user a perception of increase in luminance, this necessitates a considerable increase in the number of LEDs. Therefore, this is not realistic in terms of cost and power consumption.

The present invention has been made in view of the above problem, and an object of the present invention is to provide a liquid crystal display device capable of increasing luminance perceived by a user without increasing the number of LEDs.

### Solution to Problem

In order to attain the above objet, a liquid crystal display device of the present invention includes: a liquid crystal panel capable of switching between a 2D display and a 3D display; a gamma characteristic changing circuit for changing a gamma characteristic of a video signal supplied to the liquid crystal panel; a backlight for backlighting the liquid crystal panel, which backlight includes an LED serving as a light source; and a backlight drive control circuit for controlling driving of the backlight, when the 3D display is carried out on the liquid crystal panel, the backlight drive control circuit controlling the driving of the backlight such that luminance of the LED is higher than that for the 2D display, and the gamma characteristic changing circuit changing a gamma characteristic of the video signal such that (i) a gray level on a low gray level side is lower than that for the 2D display and (ii) a gray level on a high gray level side is higher than that for the 2D display.

According to the configuration, it is possible, when a 3D display is carried out on the liquid crystal panel, to increase luminance of the backlight by increasing luminance of the LED so that the luminance is higher than that for the 2D display. Moreover, since a gamma characteristic of an input video signal is changed so that a gray level on the low gray level side is lower than that for the 2D display and a gray level on the high gray level side is higher than that for the 2D display, it is possible to dramatically increase luminance in halftone of the input video signal.

By increasing the luminance of the backlight and significantly increasing the luminance in halftone of the input video signal like above, it is possible to give a user a perception of increase in luminance without increasing the number of LEDs.

This is because, although an increase in the luminance of the backlight alone is not sufficient to increase luminance perceived by a user, the luminance perceived by a user is increased by increasing also the luminance in halftone of the input video signal significantly.

That is, a process for increasing the luminance of the LED is carried out simultaneously with a process for increasing the luminance in halftone of an input video signal during a 3D display. This makes it possible to give a user a perception of increase in the luminance without cost increase caused by for example an increase in the number of LEDs.

In order to attain the above object, a liquid crystal display of the present invention includes: a liquid crystal panel which carries out at least a 3D display; a backlight for backlighting the liquid crystal panel, which backlight includes an LED serving as a light source; a backlight drive control circuit for controlling driving of the backlight; and a brightness increase instruction section for sending an instruction to increase brightness, the backlight drive control circuit causing, upon receipt of the instruction from the brightness increase instruction section while the 3D display is being carried out on the liquid crystal panel, (i) an ON ratio of the LED to be larger than that immediately before the receipt of the instruction and (ii) the amount of power supply to the LED to be larger than that immediately before the receipt of the instruction.

According to the configuration, the backlight drive control circuit causes, upon receipt of the instruction to increase brightness from the brightness increase instruction section while a 3D display is carried out on the liquid crystal panel, (i) the ON ratio of the LED serving as the light source of the backlight to be larger than that immediately before the receipt of the instruction and (ii) the amount of power supply to the LED to be larger than that immediately before the receipt of the instruction. This makes it possible to give a user a perception of increase in luminance without increasing the number of LEDs.

This is because, although an increase in the luminance of the backlight alone is not sufficient to increase luminance perceived by a user, the luminance perceived by a user is increased by increasing also the ON ratio of the LED serving as the light source of the backlight so that the ON ratio is larger than that immediately before the receipt of the instruction to increase the brightness.

Therefore, it is possible to give a user a perception of increase in luminance during a 3D display, without cost increase caused by for example an increase in the number of LEDs.

### Advantageous Effects of Invention

A liquid crystal display of the present invention includes: a liquid crystal panel capable of switching between a 2D display and a 3D display; a gamma characteristic changing circuit for changing a gamma characteristic of a video signal supplied to the liquid crystal panel; a backlight for backlighting the liquid crystal panel, which backlight includes an LED serving as a light source; and a backlight drive control circuit for controlling driving of the backlight, when the 3D display is carried out on the liquid crystal panel, the backlight drive control circuit controlling the driving of the backlight such that luminance of the LED is higher than that for the 2D display, and the gamma characteristic changing circuit changing a gamma characteristic of the video signal such that (i) a gray level on a low gray level side is lower than that for the 2D display and (ii) a gray level on a high gray level side is higher than that for the 2D display. This brings about the effect of giving a user a perception of increase in luminance while a 3D display is being carried out, without cost increase caused by for example an increase in the number of LEDs.

### Brief Description of Drawings

Fig. 1

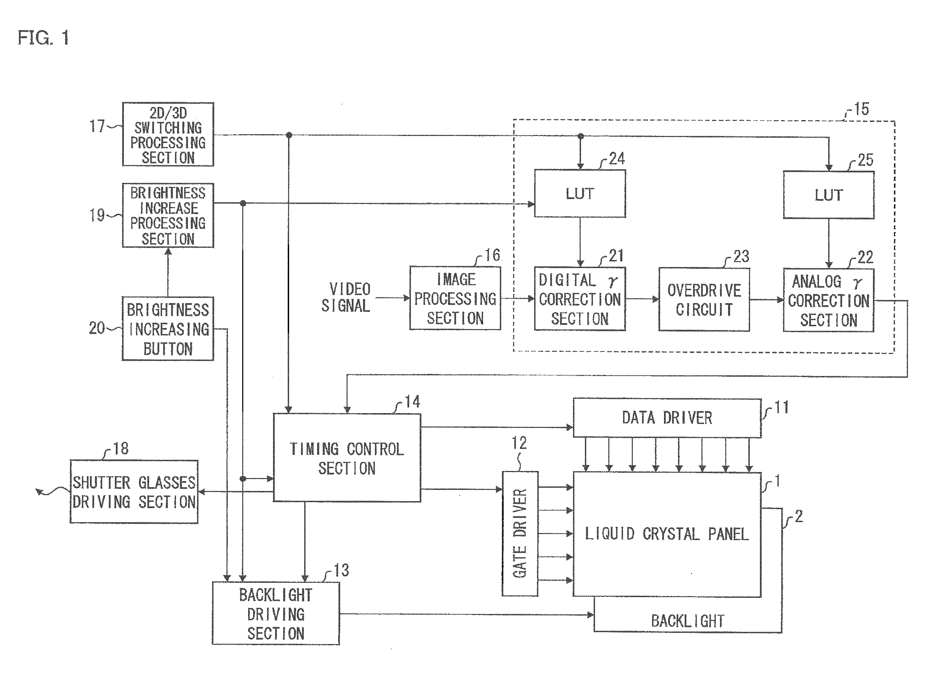

   Fig. 1 is a block diagram schematically illustrating a configuration of a liquid crystal display device in accordance with an embodiment of the present invention.
Fig. 2

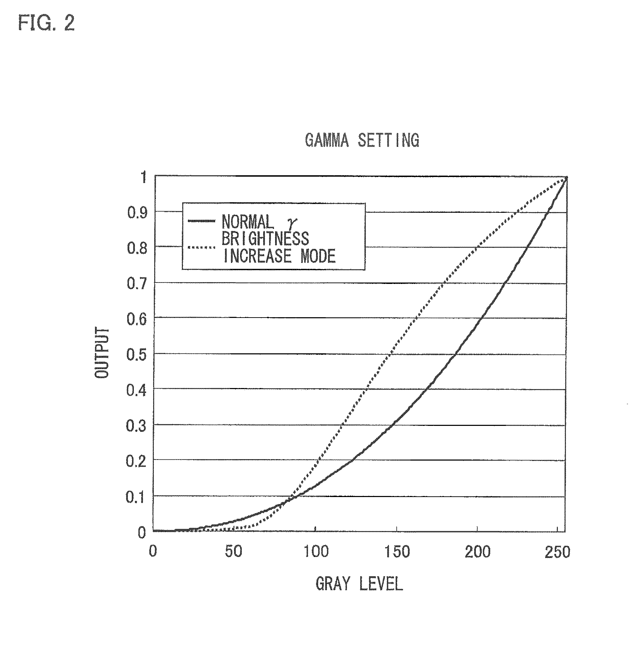

   Fig. 2 is a graph showing conversion of a gamma characteristic.
Fig. 3

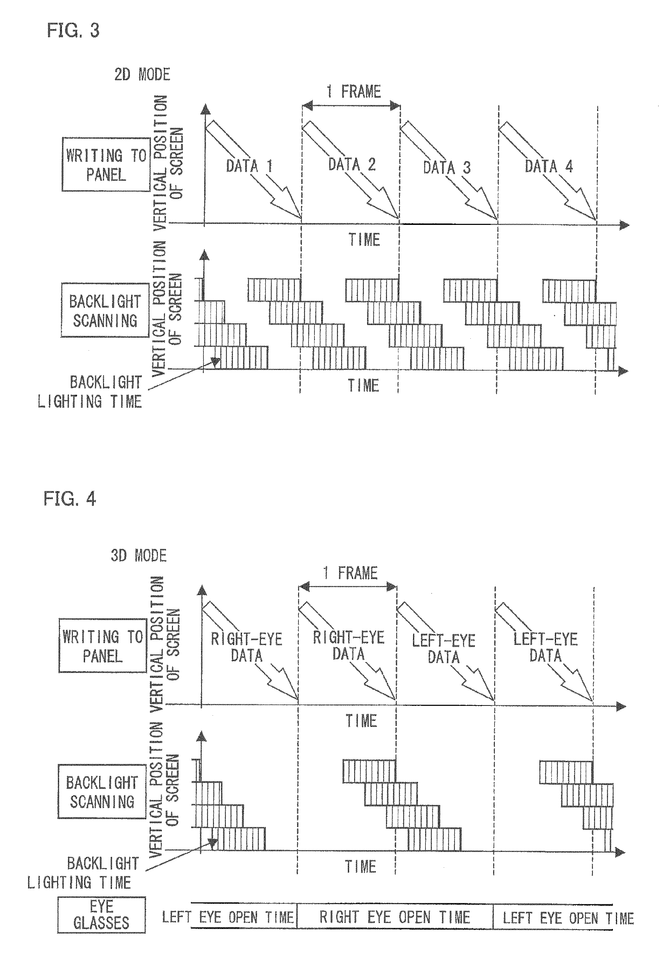

   Fig. 3 is a drive timing diagram for a 2D display mode.
Fig. 4
   Fig. 4 is a drive timing diagram for a 3D display mode.
Fig. 5

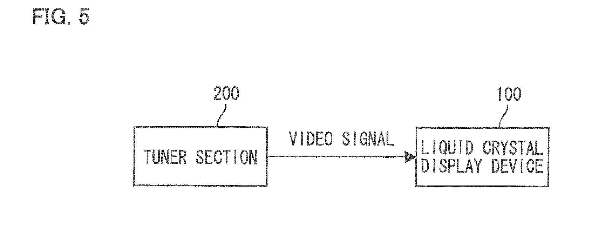

   Fig. 5 is a block diagram schematically illustrating a configuration of a television receiver to which a liquid crystal display device of the present invention is applied.

### Description of Embodiments

The following description discusses one embodiment of the present invention.

The present embodiment discusses a liquid crystal display device capable of switching between a 2D (two-dimensional) display and a 3D (three-dimensional) display.

According to the liquid crystal display device, an image to be displayed is given a three-dimensional appearance by a frame sequential method (time-division driving method), i.e., by switching between displaying of a right-eye image and a left-eye image for every single frame. In the following description, a display mode in which a 2D display is carried out is referred to as a 2D display mode, and a display mode in which a 3D display is carried out is referred to as 3D display mode.

### <Description of overall liquid crystal display device>

As illustrated in Fig. 1, a liquid crystal display device includes (i) a liquid crystal panel 1, (ii) a backlight 2 that backlights the liquid crystal panel 1, (iii) a data driver 11 and a gate driver 12 serving as driving circuits for driving the liquid crystal panel 1, (iv) a backlight driving section (backlight drive control circuit) 13 serving as a driving circuit for driving the backlight 2, (v) a timing control section 14 which generates time control signals to control timings of driving of these driving circuits, (vi) a signal processing section 15 which supplies a video signal to the timing control section 14, and (vii) an image processing section 16 which supplies, to the signal processing section 15, a video signal to be processed.

The liquid crystal display device further includes (viii) a 2D/3D switching processing section 17 which generates and outputs various instruction signals for switching between the 2D display mode and the 3D display mode, (ix) a shutter glasses driving section 18 for controlling opening and closing of shutters of a pair of active shutter glasses (not illustrated) for use in the 3D display mode, (x) a brightness increase processing section 19 for increasing luminance of the liquid crystal panel 1 and the backlight 2 perceived by a user, and (xi) a brightness increasing button (brightness increase instruction section) 20 for sending, to the brightness increase processing section 19, an instruction to increase the brightness of the liquid crystal display device.

The liquid crystal panel 1 is constituted by two glass substrates between which a liquid crystal material is sandwiched, and includes a plurality of pixels. A polarizer (not illustrated) is bonded to a surface of each of the two glass substrates on the front and back sides.

The liquid crystal panel 1 is configured to display an image based on a video signal. The liquid crystal display panel 1 displays the image by (i) turning on/off switching elements corresponding to the respective pixels in accordance with driving signals supplied from the gate driver 12 and (ii) modulating light from the backlight 2 in accordance with driving voltages supplied from the data driver 11 to the pixels.

The backlight 2 is a light source for irradiating the liquid crystal panel 1 with light, and is constituted by a plurality of LEDs (light emitting diodes).

The data driver 11 converts received data (data obtained by subjecting a video signal to certain processing) into a voltage value in response to a timing signal from the timing control section 14, and supplies drive voltages to the pixels of the liquid crystal panel 1. Meanwhile, the gate driver 12 sequentially turns ON/OFF the gates of TFT (thin film transistors), serving as switching elements corresponding to the respective pixels, of the liquid crystal panel 1 in response to a timing signal from the timing control section 14. This causes a desired voltage corresponding to the video signal to be applied to the pixels of the liquid crystal panel 1.

The backlight driving section 13 drives the backlight 2 to turn on/off the LEDs which constitute the backlight 2, in response to a timing signal from the timing control section 14. The backlight driving section 13 controls the backlight 2 to turn on/off the LEDs so as to carry out the aforementioned backlight scanning.

Note here that the backlight driving section 13 carries out (1) control for increasing, when the 2D display is switched to the 3D display, luminance of the backlight 2 so that the luminance thus increased is higher than luminance for the 2D display and (2) control for further increasing, while the 3D display is being carried out, the luminance of the backlight 2 so that the luminance thus increased is higher than that immediately before receipt of an instruction to increase brightness.

In the case of the above (1), the backlight driving section 13 causes the amount of power supply to the LEDs constituting the backlight 2 to be larger than that for the 2D display.

Further, in the case of the above (2), the backlight driving section 13 causes, upon receipt of an instruction to increase brightness from the brightness increase button 20 while a 3D display is being carried out on the liquid crystal panel 1, an ON ratio of the LEDs constituting the backlight 2 to be larger than that immediately before the receipt of the instruction.

Note that, while a 3D display is being carried out, the control of the above (1) can also be carried out as well as the control of the above (2).

The timing control section 14 controls timings of driving of the data driver 11 and the gate driver 12, and supplies, to the data driver 11 and the gate driver 12, video data received from the signal processing section 15. The timing control section 14 further controls timings of (i) scanning of the backlight 2 and (ii) driving of the pair of active shutter glasses (not illustrated) while a 3D display is carried out.

The pair of active shutter glasses is provided with shutters (liquid crystal panels) in both right and left parts of its frame, and is configured such that the shutters are driven independently from each other. The shutters are driven in response to a drive signal from the shutter glasses driving section 18.

The shutter glasses driving section 18 supplies a drive signal to the pair of active shutter glasses, in response to a timing signal from the timing control section 14. Such a drive signal is generally carried by an infrared ray.

The signal processing section 15 is configured to (i) carry out gamma correction and overdrive processing with respect to a video signal having been subjected to image processing by the image processing section 16 and (ii) supply obtained video data to the timing control section 14. Specifically, the signal processing section 15 includes a digital γ correction section (gamma characteristic changing circuit) 21, an analog γ correction section (gamma characteristic changing circuit) 22, an overdrive circuit 23, a LUT 24, and a LUT 25. The signal processing section 15 is described later in detail.

The image processing section 16 carries out, with respect to a video signal that it receives, image processing such as color tinge correction, color tone correction, gray level correction and noise removal. The image processing section 16 is configured to convert a video signal for a 3D display, such as frame packing and side-by-side, into a video signal for a frame sequential method. The video signal thus obtained through the image processing by the image processing section 16 is supplied to the subsequent signal processing section 15.

The video signal supplied to the image processing section 16 here is for example a video signal (broadcasting signal) received by a tuner (not illustrated) or a video signal from a VTR (video tape recorder) or from various players.

The 2D/3D switching processing section 17 generates an instruction signal for changing gamma correction that is to be carried out by the signal processing section 15, in response to (i) switching between the 2D display mode and the 3D display mode by a user or (ii) a 2D/3D display mode switching signal generated automatically in accordance with a mode identification signal etc. which is included in a video signal that the 2D/3D switching processing section 17 receives. Then, the 2D/3D switching processing section 17 outputs the instruction signal. Specifically, the 2D/3D switching processing section 17 generates an instruction signal for selecting LUTs of the LUT 24 of the digital γ correction section 21 and the LUT 25 of the analog γ correction section 22, which LUTs correspond to a selected display mode, and supplies the instruction signal to the signal processing section 15. Meanwhile, the 2D/3D switching processing section 17 also supplies, to the timing control section 14, an instruction signal for changing the timing of turning-on of the backlight 2 to a timing corresponding to the selected display mode.

Generally, luminance is lower in the 3D display mode than in the 2D display mode. Therefore, as described earlier, the present embodiment includes the brightness increase processing section 19 and the brightness increasing button 20.

When the brightness increase button 20 is pressed by a user during the 3D display mode, the brightness increase processing section 19 (i) sends, to the LUT 24, an instruction signal to expand halftone and (ii) sends, to the backlight driving section 13, an instruction signal to increase the amount of electric current to be supplied to the LEDs.

The instruction signal to expand the halftone is an instruction signal to change a LUT in the LUT 24 which is to be referenced by the digital γ correction section 21.

Further, the instruction signal to increase the amount of electric current to be supplied to the LEDs is an instruction signal to extend a period during which the backlight 2 is ON, thereby increasing the amount of electric current to be supplied to the LEDs.

The following description discusses the signal processing section 15 in detail.

As described earlier, the signal processing section 15 includes the digital γ correction section (gamma characteristic changing section) 21, the overdrive circuit 23, the analog γ correction section (gamma characteristic changing section) 22, the LUT 24, and the LUT 25.

Note here that gamma correction is carried out by the two sections: the digital γ correction section 21 and the analog γ correction section 22. A total gamma characteristic means overall gamma characteristic corrected by the two respective γ correction sections. Specifically, the digital γ correction section 21 and the analog γ correction section 22 constitute a gamma characteristic changing section for changing a gamma characteristic, which is recited in the claims of the present invention.

### <Description of digital γ correction section 21>

The digital γ correction section 21 corrects a gamma characteristic so that a total gamma characteristic for a 3D display is substantially equal to that for a 2D display. In other words, the digital γ correction section 21 changes a gamma characteristic by converting a received gray level with reference to the LUT 24. Specifically, as illustrated in Fig. 2, a gamma characteristic of an input video signal is set to either of the following two types of digital gamma characteristics: a gamma characteristic for normal γ and a gamma characteristic for brightness increase mode.

Note, here, that the gamma characteristic for normal γ means a gamma characteristic having a digital gamma value of 2.2, and the gamma characteristic for brightness increase mode means a gamma characteristic that is set such that (i) luminance (gray level) on the low gray level side is lower than luminance (gray level) indicated by the gamma characteristic for normal γ and (ii) luminance (gray level) on the high gray level side is higher than luminance (gray level) indicated by the gamma characteristic for normal γ.

Note that, in the present embodiment, the gamma characteristic for normal γ is a gamma characteristic of an input video signal for a 2D display, and the gamma characteristic for brightness increase mode is a gamma characteristic of an input video signal for a 3D display.

As described earlier, such changing of a gamma characteristic is carried out with reference to the LUT 24. In the LUT 24, a LUT corresponding to a display mode selected by an instruction signal from the 2D/3D switching processing section 17 is in a selected state, and is referenced by the digital correction section 21. Note that the LUT 24 receives, as well as the instruction signal from the 2D/3D switching processing section 17, an instruction signal from the above-mentioned brightness increase processing section 19 (i.e., an instruction signal to change a gamma characteristic of an input video signal to a gamma characteristic for brightness increase mode, an instruction signal to change a gamma characteristic of an input video signal to a gamma characteristic for normal γ). In response to such an instruction signal, a LUT for changing a gamma characteristic of an input video signal to a gamma characteristic for normal γ or a LUT for changing the gamma characteristic to a gamma characteristic for brightness increase mode is selected.

Specifically, assume a LUT of the LUT 24 is already in a selected state so as to correspond to either of the display modes. Even in this case, if an instruction signal from the brightness increase processing section 19 is further supplied to the LUT 24, a LUT for changing a gamma characteristic of an input video signal to a gamma characteristic for either normal γ or for brightness increase mode is brought into the selected state in accordance with such an instruction signal from the brightness increase processing section 19. The LUT thus brought into the selected state is referenced by the digital γ correction section 21.

Note that, in a case where the LUT 24 receives, from the brightness increase processing section, an instruction signal to change a gamma characteristic of an input video signal to a gamma characteristic for brightness increase mode during the 2D display mode, the gamma characteristic of the input video signal is changed to the gamma characteristic for brightness increase mode. If this is the case, gray levels are not properly displayed on the low gray level side and on the high gray level side, and display quality decreases. Therefore, it is referable to arrange the LUT 24 such that the LUT 24 does not accept the instruction signal from the brightness increase processing section during the 2D display mode. Further note that the gamma characteristic for brightness increase mode is not limited to a single kind, and therefore a plurality of gamma characteristics having different characteristics can be selectively used in steps.

### <Description of overdrive circuit 23>

The overdrive circuit 23 is provided between the digital γ correction section 21 and the analog γ correction section 22. The overdrive circuit 23 calculates an overdrive amount from a gray level for a previous frame and a gray level for a current frame, and outputs the overdrive amount.

The overdrive circuit 23 uses different overdrive parameters for the 2D display mode and the 3D display mode. With use of such an overdrive parameter, the overdrive circuit 23 finds an overdrive value for an input gray level that has been subjected to digital gamma correction by the digital γ correction section 21, which overdrive value corresponds to a selected display mode. The overdrive circuit 23 then supplies the overdrive value to the subsequent analog γ correction section 22.

### <Description of analog γ correction section 22>

The analog γ correction section 22 changes, in accordance with a preset analog gamma value, an input gray level to a gamma characteristic that corresponds to a liquid crystal panel. That is, the analog γ correction section 22 corrects, with reference to the LUT 25, a voltage corresponding to each gray level, which voltage is to be applied to liquid crystal. Specifically, the overdrive circuit 23 corrects an overdrive value supplied from the overdrive circuit 23 to a voltage value to be applied to liquid crystal, with reference to the LUT 25.

Note here that, in the LUT 25, a fixed analog gamma value can be used regardless of the instruction signal from the 2D/3D switching processing section 17. In order to change a gamma characteristic in smaller increments, however, not only the digital γ correction section 21 but also the analog γ correction section 22 can be used with the digital γ correction section 21 so that the analog gamma characteristic is different between the 2D display and the 3D display.

When the analog gamma characteristic is to be changed, in the LUT 25, a LUT corresponding to a display mode selected by the instruction signal from the 2D/3D switching processing section 17 is brought into the selected state, and is referenced by the analog γ correction section 22.

The total gamma characteristic which is determined by the digital γ correction section 21 and the analog γ correction section 22 is, as described earlier, different between the normal γ mode and the brightness increase mode. Specifically, the total gamma characteristic is set to have a gamma curve as illustrated in Fig. 2.

### <Description of drive timing>

The following description discusses a timing of a display carried out by the liquid crystal panel 1 and a timing of scanning of the back light 2.

Fig. 3 shows a timing diagram for the 2D display mode. Fig. 4 shows a timing diagram for the 3D display mode.

As shown in Fig. 3, in the case of the 2D display mode, video signals (data) are written to the liquid crystal panel I from top to bottom for every frame. In correspondence with this, backlight scanning is carried out such that light sources in the backlight 2 are sequentially turned on from top to bottom and are sequentially turned off from top to bottom after a certain period of time, for every frame.

On the other hand, as shown in Fig. 4, in the 3D display mode, (i) video signals (data) for a right eye and video signals for a left eye are written two by two to the liquid crystal panel 1 and (ii) backlight scanning is carried out such that light sources in the backlight 2 are sequentially turned on from top to bottom at the time of the second writing of each video signal and are turned off after a certain period of time. That is, the backlight 2 is turned on for every other frame in the 3D display mode.

Meanwhile, the shutters of the pair of active shutter glasses are driven by the shutter driving section 18 in synchronization with the switching between the first writing of a video signal and the second writing of the video signal within a single frame. Specifically, in a single frame, (i) the shutter for a right eye of the pair of active shutter glasses is closed and the shutter for a left eye is open until completion of the first writing of a video signal for the right eye and (ii) the shutter for a left eye of the pair of active shutter glasses is closed and the shutter for the right eye is open from the start of the second writing of the video signal for the right eye.

Repeating the foregoing operations achieves a 3D display, i.e., a stereoscopic view.

Note here that, as shown in Fig. 4, in the 3D display mode, the LEDs constituting the backlight 2 are ON for the same period of time as in the 2D display mode as shown in Fig. 3. However, since the videos for the right and the left are displayed alternately, the LEDs are OFF for a longer period of time in the 3D display mode than in the 2D display mode. That is, a duty ratio of the LEDs is smaller in the 3D display mode than in the 2D display mode. This results in insufficient luminance at the time of the 3D display, thereby causing a problem that a displayed image looks dark.

In view of this, according to the present embodiment, in the 3D display mode as illustrated in Fig. 4, the amount of power supply to the LEDs is caused to be larger than that in the 2D display mode, without changing the duty ratio of the LEDs. In this way, luminance of the LEDs is increased.

The descriptions so far discussed the case where the luminance perceived by a user is increased by changing a gamma characteristic and/or by increasing the amount of power supply to the LEDs constituting the backlight 2 when the 2D display mode is switched to the 3D display mode. Note, however, that it is also possible to further increase the brightness during the 3D display mode.

This can be realized in the following manner, That is, as described earlier, the backlight driving section 13 causes, upon receipt of an instruction to increase brightness from the brightness increasing button 20 while a 3D display is being carried out on the liquid crystal panel 1, a duty ratio of the LEDs constituting the backlight 2 to be larger than that immediately before the receipt of the instruction.

As described above, it is possible to give a user a perception of further increase in luminance by, when a further increase in brightness is requested during the 3D display mode, not only increasing the amount of power supply to the LEDs but also carrying out the above processes so as to increase the duty ratio of the LEDs.

Note here that the duty ratio for a 2D display can be increased to 100% for an increase in luminance. However, in the case of a 3D display, since videos are displayed by a scanning backlight method as described earlier, a duty ratio of 100% will cause videos for a right eye and a left eye to be displayed simultaneously. As a result, the videos for the right eye and left eye cannot be separated by the pair of active shutter glasses, and crosstalk occurs (the videos look like two overlapping images). Therefore, in the case of a 3D display, it is not possible to increase the duty ratio to 100% unlike the case of a 2D display, and is necessary to set the duty ratio at 50% or less.

As has been described, while a 3D display is carried out, it is possible to increase brightness perceived by a user by expanding halftone by changing a gamma characteristic. Further, it is possible to increase luminance perceived by a user by extending a period during which the LEDs are ON, i.e., increasing a duty ratio, and further increasing the amount of electric current supplied to the LEDs.

Note here that, when a gamma characteristic is to be corrected by the digital γ correction section 21 and the analog γ correction section 22, to what extent the halftone is to be expanded depends on (i) to what extent (to which gray level) luminance on the low gray level side is to be reduced and (ii) to what extent (to which gray level) luminance on the high gray level side is to be increased. Note that, if the luminance on the low gray level side is reduced too much and/or the luminance on the high gray level side is increased too much for the purpose of expanding halftone, the following occurs. That is, although the luminance perceived by a user increases, gray levels are not property displayed on the low gray level side and/or the high gray level side, and display quality decreases.

Therefore, to what extent (to which gray level) luminance is to be reduced on the low gray level side and to what extent (to which gray level) luminance is to be increased on the high gray level side for the purpose of expanding halftone can be determined in consideration of display quality.

Further, the liquid crystal display device is preferably configured such that, when a 3D display is carried out on the liquid crystal panel 1, the backlight driving section 13 (backlight drive control circuit) causes the amount of power supply to the LEDs constituting the backlight to be larger than that for a 2D display.

According to the configuration, it is possible, when a 3D display is carried out on the liquid crystal panel, to increase luminance of the backlight by increasing the amount of power supply to the LED so that the amount is larger than that for a 2D display.

Further, it is preferable that the liquid crystal display device further includes: a brightness increase instruction section for sending an instruction to increase brightness, and that the backlight driving section 13 causes, upon receipt of the instruction from the brightness increase instruction section 19 while the 3D display is being carried out on the liquid crystal panel 1, an ON ratio of the LEDs constituting the backlight 2 to be larger than that immediately before the receipt of the instruction.

Further, it is preferable that the liquid crystal display device further includes: a brightness increasing button 20 (brightness increase instruction section) for sending an instruction to increase brightness, and that the backlight driving section 13 causes, upon receipt of the instruction from the brightness increasing button 20 while the 3D display is being carried out on the liquid crystal panel 1, the amount of power supply to the LEDs constituting the backlight 2 to be larger than that immediately before the receipt of the instruction.

Further, it is preferable that the liquid crystal display device further includes: a brightness increasing button 20 for sending an instruction to increase brightness, and that the backlight driving section 13 causes, upon receipt of the instruction from the brightness increase instruction section while the 3D display is being carried out on the liquid crystal panel 1, (i) an ON ratio of the LEDs to be larger than that immediately before the receipt of the instruction and (ii) the amount of power supply to the LEDs to be larger than that immediately before the receipt of the instruction.

The present embodiment described an example in which a 3D display is carried out by a frame sequential method. Note, however, that this does not imply any limitation. The 3D display can be carried out by any method provided that the method can be carried out by a liquid crystal display device.

Further, the present embodiment is based on the assumption that a liquid crystal display device is capable of switching between a 2D display mode and a 3D display mode. Note, however, the liquid crystal device can be one that is capable only of a 3D display mode.

Meanwhile, a liquid crystal device of the present invention is preferably used for a television receiver. In such case, a video signal carried by television broadcasting waves is supplied to the liquid crystal display device from a tuner which receives the television broadcasting waves.

As shown in for example Fig. 5, such a television receiver is configured such that a tuner section 200 for receiving television broadcasting waves is connected to a liquid crystal display device 100. That is, the tuner section 200 receives television broadcasting waves and supplies video signals to the liquid crystal display device 100. The liquid crystal device 100 then displays images (videos) based on the video signals thus supplied.

A liquid crystal display device of the present invention can be applied to, as well as a television receiver, any electronic device including a display device capable of carrying out a 3D display.

The present invention is not limited to the descriptions of the respective embodiments, but may be altered within the scope of the claims. An embodiment derived from a proper combination of technical means disclosed in different embodiments is encompassed in the technical scope of the invention.

### Industrial Applicability

The present invention is applicable to any liquid crystal display device capable of carrying out a 3D display.

### Reference Signs List

- 1: Liquid crystal panel
- 2: Backlight
- 11: Data driver
- 12: Gate driver
- 13: Backlight driving section (backlight drive control circuit)
- 14: Timing control section
- 15: Signal processing section
- 16: Image processing section
- 17: 2D/3D switching processing section
- 18: Shutter glasses driving section
- 19: Brightness increase processing section
- 20: Brightness increasing button (brightness increase instruction section)
- 21: Digital γ correction section (gamma characteristic changing section)
- 22: Analog γ correction section (gamma characteristic changing section)
- 23: Overdrive circuit
- 24: LUT
- 25: LUT

## Claims

1. A liquid crystal display device, comprising:
a liquid crystal panel capable of switching between a 2D display and a 3D display;
a gamma characteristic changing circuit for changing a gamma characteristic of a video signal supplied to the liquid crystal panel;
a backlight for backlighting the liquid crystal panel, which backlight includes an LED serving as a light source; and
a backlight drive control circuit for controlling driving of the backlight,
when the 3D display is carried out on the liquid crystal panel,
the backlight drive control circuit controlling the driving of the Backlight such that luminance of the LED is higher than that for the 2D display, and
the gamma characteristic changing circuit changing a gamma characteristic of the video signal such that (i) a gray level on a low gray level side is lower than that for the 2D display and (ii) a gray level on a high gray level side is higher than that for the 2D display.

2. The liquid crystal display device in accordance with Claim 1, wherein, when the 3D display is carried out on the liquid crystal panel,
the backlight drive control circuit causes the amount of power supply to the LED to be larger than that for the 2D display.

3. A liquid crystal display device in accordance with Claim 1, further comprising:
a brightness increase instruction section for sending an instruction to increase brightness,
the backlight drive control circuit causing, upon receipt of the instruction from the brightness increase instruction section while the 3D display is being carried out on the liquid crystal panel, an ON ratio of the LED to be larger than that immediately before the receipt of the instruction.

4. A liquid crystal display device in accordance with Claim 1, further comprising:
a brightness increase instruction section for sending an instruction to increase brightness,
the backlight drive control circuit causing, upon receipt of the instruction from the brightness increase instruction section while the 3D display is being carried out on the liquid crystal panel, the amount of power supply to the LED to be larger than that immediately before the receipt of the instruction.

5. A liquid crystal display device in accordance with Claim 1, further comprising:
a brightness increase instruction section for sending an instruction to increase brightness,
the backlight drive control circuit causing, upon receipt of the instruction from the brightness increase instruction section while the 3D display is being carried out on the liquid crystal panel, (i) an ON ratio of the LED to be larger than that immediately before the receipt of the instruction and (ii) the amount of power supply to the LED to be larger than that immediately before the receipt of the instruction.

6. A liquid crystal display device comprising:
a liquid crystal panel which carries out at least a 3D display;
a backlight for backlighting the liquid crystal panel, which backlight includes an LED serving as a light source;
a backlight drive control circuit for controlling driving of the backlight; and
a brightness increase instruction section for sending an instruction to increase brightness,
the backlight drive control circuit causing, upon receipt of the instruction from the brightness increase instruction section while the 3D display is being carried out on the liquid crystal panel, (i) an ON ratio of the LED to be larger than that immediately before the receipt of the instruction and (ii) the amount of power supply to the LED to be larger than that immediately before the receipt of the instruction.

7. A television receiver, comprising:
a tuner section for receiving television broadcasting; and
a display device for displaying the television broadcasting received by the tuner section,
the display device being a liquid crystal display device recited in Claim 1 or Claim 6.
